# EUROPÄISCHE PATENTANMELDUNG

(11) **EP 3 249 593 A1**
(43) Veröffentlichungstag der Anmeldung: **29.11.2017**
(21) Anmeldenummer: 16171223.7
(22) Anmeldetag: 25.05.2016
(51) Int. Cl.: G06Q 10/08

(54) **VERFAHREN ZUR BEARBEITUNG EINER POSTSENDUNG UND POSTBESCHREIBUNGSSYSTEM**

(71) Anmelder: Siemens Aktiengesellschaft, 80333 München (DE)
(72) Erfinder: ZETTLER, Michael, 78476 Allensbach (DE)
(74) Vertreter: Maier, Daniel Oliver

(57) **Zusammenfassung**

Die Erfindung betrifft ein Verfahren zur Bearbeitung einer Postsendung (12) mit einer Versandinformation (14) eines Logistikdienstleisters, wobei die Versandinformation (14) zumindest eine Information über den Logistikdienstleister sowie Sendungsinformationen enthält.

Zur verbesserten Bearbeitung der Postsendung wird vorgeschlagen, aus der Versandinformation (14) den Logistikdienstleister zu ermitteln und eine der Sendungsinformationen als die die Postsendung (12) innerhalb des ermittelten Logistikdienstleisters identifizierende Sendungsinformation zu erkennen.

## Beschreibung

Die Erfindung betrifft ein Verfahren zur Bearbeitung einer Postsendung mit einer Versandinformation eines Logistikdienstleisters, wobei die Versandinformation zumindest eine Information über den Logistikdienstleister sowie Sendungsinformationen enthält.

Die Zahl der Postsendungen, die transportiert werden muss, nimmt heutzutage immer weiter zu. Ein Grund kann im steigenden Onlinehandel gesehen werden. Besonders die Zahl der Postsendungen, die zumindest eine Ländergrenze überschreiten und/oder von mehreren Transportunternehmen transportiert werden, nimmt immer weiter zu.

Häufig werden in verschiedenen Ländern und/oder von verschiedenen Transportunternehmen verschiedenartige Versandinformation genutzt. Die jeweilige Versandinformation ist beispielsweise auf einem Etikett der jeweiligen Postsendung platziert. Dabei können sich auch die Layouts verschiedener Etiketten stark voneinander unterscheiden.

Zu der Versandinformation einer Postsendung zählt eine die Postsendung identifizierende Sendungsinformation, beispiesweise ein Code, welcher beispielsweise auf dem Etikett aufgedruckt sein kann. Sowohl die Art des Codes als auch die Platzierung des Codes kann sich bei verschiedenen Postsendungen unterscheiden. Die die Postsendung identifizierende Sendungsinformation eignet sich zur Identifizierung der Postsendung innerhalb desjenigen Transportunternehmens, welches die Versandinformationen (d. h. das Etikett) erstellt hat. Für ein anderes Transportunternehmen ist das Identifikationsmerkmal nicht mehr eindeutig mit einer Empfängerinformation verknüpft und verliert seinen Nutzen. In der Regel wird deshalb bei einem Wechsel des Transportunternehmens von dem neuen Transportunternehmen die Versandinformation erneut (von Hand) eingegeben und eine neue Versandinformation wird erstellt. Beispielsweise kann dabei ein neues Etikett erstellt werden, welches über das erste Etikett geklebt wird. Diese Vorgehensweise bedeutet einen erheblichen Aufwand. Auf diese Weise entstehen außerdem hohe Kosten.

Eine Aufgabe der vorliegenden Erfindung ist es, ein verbessertes Verfahren zur Bearbeitung einer Postsendung bereitzustellen, insbesondere um den Arbeitsaufwand und/oder die Kosten zu senken.

Die Aufgabe wird gelöst durch das Verfahren zur Bearbeitung einer Postsendung mit einer Versandinformation eines Logistikdienstleisters, wobei die Versandinformation zumindest eine Information über den Logistikdienstleister sowie Sendungsinformationen enthält, bei dem erfindungsgemäß aus der Versandinformation der Logistikdienstleister ermittelt wird und eine der Sendungsinformationen als die die Postsendung innerhalb des ermittelten Logistikdienstleisters identifizierende Sendungsinformation erkannt wird.

Die Erfindung geht von der Überlegung aus, dass das Verfahren eine effiziente Möglichkeit, insbesondere eine schnelle und Personal sparende Möglichkeit, darstellt, um die Postsendung zu bearbeiten. Auf diese Weise kann die Postsendung schnell und Personal sparend identifiziert und/oder sortiert werden.

Es ist zweckmäßig, wenn die Postsendung ein Etikett aufweist, welches die Versandinformationen aufweist. Weiter kann sich die Versandinformation direkt auf der Postsendung befinden. Z. B. kann die Versandinformation direkt auf der Postsendung aufgedruckt sein.

Die Postsendung kann beispielsweise ein Paket, ein Päckchen, und/oder ein Brief sein. Weiter kann das Logistikdienstleister z. B. ein Kurier-, Express-, Post- und/oder Paketdienstleister sein. Außerdem kann das Logistikdienstleister ein Transportdienstleister sein.

Als Logistikdienstleister wird zweckmäßigerweise dasjenige Unternehmen bzw. derjenige Dienstleister aufgefasst, welches/welcher die Versandinformation auf der Postsendung erstellt hat und/oder in seinem Namen erstellen lassen hat. Weiter kann als Logistikdienstleister dasjenige Unternehmen aufgefasst werden, welches die Versandinformation auf die Postsendung aufgebracht hat und/oder in seinem Namen aufbringen lassen hat. Außerdem kann das Logistikdienstleister beispielsweise einen ersten Transport(abschnitt) der Postsendung übernommen haben.

Zweckmäßigerweise wird für den ermittelten Logistikdienstleister eine Information bestimmt, unter Verwendung derer vorzugsweise eine der Sendungsinformationen als die die Postsendung (innerhalb des ermittelten Logistikdienstleisters) identifizierende Sendungsinformation erkannt wird.

Vorzugsweise ist die für den ermittelten Logistikdienstleister bestimmte Information eine Platzierung der die Postsendung identifizierenden Sendungsinformation. Die Platzierung der die Postsendung identifizierenden Sendungsinformation gibt sinnvollerweise an, wo die die Postsendung identifizierende Sendungsinformation platziert ist.

Weiter kann die für den ermittelten Logistikdienstleister bestimmte Information eine Form der die Postsendung identifizierenden Sendungsinformation sein. Die Form der die Postsendung identifizierenden Sendungsinformation gibt zweckmäßigerweise an, wie die die Postsendung identifizierende Sendungsinformation aussieht.

Weiter ist es vorteilhaft, wenn unter Verwendung der die Postsendung identifizierenden Sendungsinformation die Postsendung identifiziert wird. Bei der Identifizierung wird zweckmäßigerweise der Postsendung zumindest eindeutig eine Empfängerinformation zugeordnet, insbesondere unter Verwendung einer Datenbank. Als zumindest eindeutig kann eindeutig oder eineindeutig verstanden werden.

Wird der Postsendung eindeutig die Empfängerinformation zugeordnet, kann die Postsendung automatisch und/oder effizient sortiert werden.

Die Empfängerinformation kann beispielsweise ein Empfängername und/oder eine Empfängeradresse sein. Zweckmäßigerweise ist die Empfängerinformation in der Datenbank gespeichert. Vorzugsweise ist die Empfängerinformation in einem Datensatz gespeichert. Anders ausgedrückt: Der Datensatz kann die Empfängerinformation aufweisen. Vorzugsweise umfasst die Datenbank den Datensatz.

Weiter ist es bevorzugt, wenn der Datensatz eine die Postsendung identifizierende Sendungsinformation aufweist. Weiter ist es zweckmäßig, wenn der Datensatz eine Transportinformation aufweist. Vorteilhafterweise umfasst die Transportinformation den Logistikdienstleister und/oder eine mit dem Logistikdienstleisters verknüpfte Information. Außerdem kann die Transportinformation zumindest eine Sendungsverfolgungsinformation ("Track und Trace Information(en)") umfassen. Ferner kann der Datensatz beispielsweise eine Verarbeitungsinformation aufweisen. Die Verarbeitungsinformation kann eine Priorität (z. B. "Eilsendung") umfassen. Weiter kann die Verarbeitungsinformation beispielsweise einen Vorsichtshinweis (z. B. "Achtung: Glas - Zerbrechlich") und/oder einen Sicherheitshinweis (z. B. "Achtung: Ätzende Flüssigkeit") umfassen.

Zweckmäßigerweise umfasst die Datenbank - neben dem erstgenannten Datensatz - weitere Datensätze. Die weiteren Datensätze können jeweils eine weitere Empfängerinformation, eine weitere Transportinformation und/oder eine weitere Verarbeitungsinformationen umfassen, d. h. die weiteren Datensätze können in analoger Form zu dem erstgenannten Datensatz vorliegen. Die Datenbank kann beispielsweise eine lokale Datenbank und/oder eine globale Datenbank ("Cloud") sein.

Vorzugsweise umfasst die Versandinformation ein Abmaß, ein Seitenverhältnis, eine Farbgestaltung, ein Logo, einen Klartext und/oder einen Code. Weiter ist es bevorzugt, wenn die Versandinformation eine Platzierung des Logos, des Klartexts und/oder des Codes umfasst.

Der Code kann maschinen- und/oder menschenlesbar sein. Insbesondere kann der Code ein alphanummerischer Code, ein Barcode und/oder ein QR-Code sein.

Zweckmäßigerweise wird zur Ermittlung des Logistikdienstleisters die Versandinformation erfasst, insbesondere visuell erfasst. Die Erfassung kann mittels einer visuellen Erfassungseinrichtung durchgeführt werden. Beispielsweise kann die visuelle Erfassungseinrichtung eine Kamera aufweisen. Bei der Erfassung kann die Versandinformation erkannt werden. Weiter kann bei der Erfassung die Versandinformation gelesen werden.

Ferner ist es bevorzugt, wenn zur Ermittlung des Logistikdienstleisters die Versandinformation mittels einer Bilderkennungssoftware und/oder mittels einer Texterkennungssoftware erkannt wird. Die Texterkennungssoftware kann eine optische Texterkennung (OCR "optical character recognition") umfassen.

Außerdem können/kann die Bilderkennungssoftware und/oder die Texterkennungssoftware in einer Datenverarbeitungseinheit ablaufen. Das heißt, die Datenverarbeitungseinheit kann die Bilderkennungssoftware und/oder die Texterkennungssoftware umfassen.

Zweckmäßigerweise werden zur Ermittlung des Logistikdienstleisters die Versandinformationen unter Verwendung von Vorwissen und/oder unter Verwendung von trainierbaren Systemen erkannt. Weiter kann die Erkennung der Versandinformationen unter Verwendung der Datenverarbeitungseinheit erfolgen. Zweckmäßigerweise umfasst die Datenverarbeitungseinheit das Vorwissen und/oder die trainierbaren Systeme.

Beispielsweise kann die Datenverarbeitungseinheit typische Versandinformationen von Postsendungen erlernen und/oder als Vorwissen eingespeichert bekommen. Auf diese Weise kann von einer erkannten Versandinformation der Postsendung auf weitere Informationen, beispielsweise auf eine Transportinformation und/oder auf eine Verarbeitungsinformation, geschlossen werden. Beispielsweise kann durch bestimmte Versandinformationen auf den Logistikdienstleister geschlossen werden. Auf diese Weise wird eine Identifizierung der Postsendung und/oder eine Sortierung der Postsendung ermöglicht und/oder verbessert.

Es ist zweckmäßig, wenn zur Ermittlung des Logistikdienstleisters die Versandinformation zumindest teilweise mit dem Vorwissen verglichen wird. Das Vorwissen kann beispielsweise mehrere Vorlagen, z. B. mehrere Logo-Vorlagen und/oder andere Vorlagen, umfassen. Beispielsweise kann ein erkanntes Logo mit dem Vorwissen, insbesondere mit den mehreren Logo-Vorlagen, verglichen werden. Auch ein anderer Teil der Versandinformation kann mit dem Vorwissen, insbesondere mit zumindest einer Vorlage, verglichen werden.

Insbesondere kann bei dem Vergleich geprüft werden, ob die Versandinformation zumindest teilweise mit dem Vorwissen übereinstimmt. Beispielsweise kann bei dem Vergleich geprüft werden, ob ein (erkanntes) Logo mit zumindest einer der mehreren Logo-Vorlagen übereinstimmt. Weiter kann bei dem Vergleich geprüft werden, welche der Vorlagen am besten mit der Versandinformation und/oder mit einem Teil der Versandinformation, beispielsweise mit einem erkannten Logo, übereinstimmt. Zweckmäßigerweise ist jeder Vorlage ein Logistikdienstleister zugeordnet. Stimmt die Vorlage mit der (erkannten) Versandinformation überein bzw. am besten überein, dann kann der Postsendung der entsprechende Logistikdienstleister zugeordnet werden. Auf diese Weise kann der Logistikdienstleister ermittelt werden.

Zweckmäßigerweise ist zumindest eine der Sendungsinformationen, beispielsweise der Code des Etiketts, die die Postsendung (innerhalb des ermittelten Logistikdienstleisters) identifizierende Sendungsinformation. Die die Postsendung identifizierende Sendungsinformation kann zur Identifizierung der Postsendung herangezogen werden. Das heißt, unter Verwendung der die Postsendung identifizierenden Sendungsinformation kann der Postsendung beispielsweise zumindest ein Datensatz und/oder zumindest eine Empfängerinformation zugeordnet werden.

Falls der Logistikdienstleister unbekannt ist, kann beispielsweise der die Postsendung identifizierenden Sendungsinformation mehrere Datensätze und/oder mehrere Empfängerinformationen zugeordnet werden. Falls der Logistikdienstleister bekannt ist, ist/wird zweckmäßigerweise der die Postsendung identifizierenden Sendungsinformation zumindest eindeutig, insbesondere eineindeutig, ein Datensatz und/oder eine Empfängerinformation zugeordnet. Der Datensatz kann der zuvor genannte Datensatz sein. Weiter kann die Empfängerinformation die zuvor genannte Empfängerinformation sein.

Weiter kann die die Postsendung identifizierende Sendungsinformation unter Verwendung von Vorwissen und/oder unter Verwendung von trainierbaren Systemen bestimmt und/oder erkannt werden.

Beispielweise kann das Vorwissen in Form zumindest einer Datengruppierung vorliegen. Die Datenverarbeitungseinheit kann die zumindest eine Datengruppierung umfassen.

Zweckmäßigerweise erfolgt die Ermittlung des Logistikdienstleisters zumindest teilautomatisch. Bei einer teilautomatischen Ermittlung des Logistikdienstleisters kann ein Teilschritt der Ermittlung anderweitig als von der Datenverarbeitungseinheit selbst ausgeführt werden, beispielsweise von einer handelnden Person. Ferner kann die Ermittlung des Logistikdienstleisters vollautomatisch ausgeführt werden, insbesondere ohne manuelles Einwirken einer Person.

Weiter ist es zweckmäßig, wenn die Erkennung der die Postsendung identifizierenden Sendungsinformation zumindest teilautomatisch erfolgt. Bei einer teilautomatischen Erkennung der die Postsendung identifizierenden Sendungsinformation kann ein Teilschritt der Ermittlung anderweitig als von der Datenverarbeitungseinheit selbst ausgeführt werden, beispielsweise von einer handelnden Person. Ferner kann die Ermittlung des Logistikdienstleisters vollautomatisch ausgeführt werden, insbesondere ohne manuelles Einwirken einer Person.

Weiter kann die Erfassung der Versandinformation zumindest teilautomatisch erfolgen. Bei einer teilautomatischen Erfassung kann ein Teilschritt der Erfassung anderweitig als von der Erfassungseinrichtung selbst ausgeführt werden, beispielsweise von einer handelnden Person. Ferner kann die Erkennung der Versandinformation zumindest teilautomatisch erfolgt. Weiter ist es zweckmäßig, wenn die Identifizierung der Postsendung zumindest teilautomatisch erfolgt. Bei einer teilautomatischen Erkennung der Versandinformation/Identifizierung der Postsendung kann ein Teilschritt der Erkennung/Identifizierung anderweitig als von der Datenverarbeitungseinheit selbst ausgeführt werden, beispielsweise von einer handelnden Person. Ferner kann die Erfassung der Versandinformation, die Erkennung der Versandinformation und/oder die Identifizierung der Postsendung vollautomatisch ausgeführt werden, insbesondere ohne manuelles Einwirken einer Person.

Zweckmäßigerweise wird das Verfahren bei einer Übernahme eines Transports der Postsendung durch einen Fremdlogistikdienstleister eingesetzt. Der Fremdlogistikdienstleister kann z. B. ein Kurier-, Express-, Post- und/oder Paketdienstleister sein. Weiter kann der Fremdlogistikdienstleister ein Transportdienstleister sein. Sinnvollerweise unterscheidet sich der Fremdlogistikdienstleister von dem Logistikdienstleister. Beispielsweise kann der Fremdlogistikdienstleister den Transport der Postsendung unmittelbar oder mittelbar von dem Logistikdienstleister übernehmen.

Weiter betrifft die Erfindung ein Postbeschreibungssystem mit einer visuellen Erfassungseinrichtung und einer Datenverarbeitungseinheit zur Durchführung des oben genannten Verfahrens.

Im Zusammenhang mit dem Verfahren erwähnte, gegenständliche Elemente können Bestandteile dieses Postbeschreibungssystem sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Postbeschreibungssystem kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Postbeschreibungssystem und eine Postsendung mit einer Versandinformation;
- FIG 2: die Versandinformation aus FIG 1;
- FIG 3: eine andere Versandinformation.

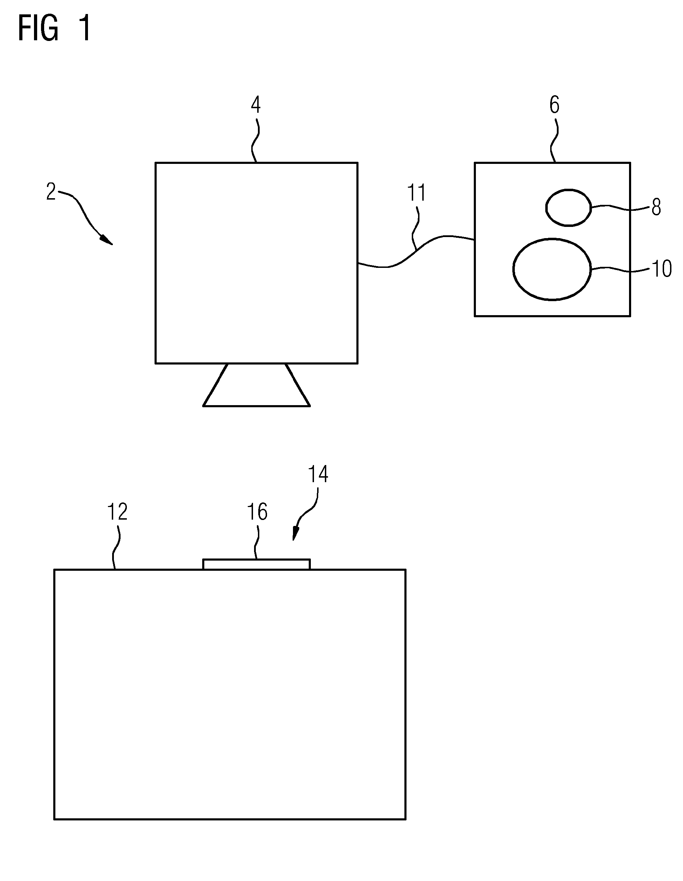

FIG 1 zeigt ein Postbeschreibungssystem 2 mit einer visuellen Erfassungseinrichtung 4 und einer Datenverarbeitungseinheit 6. Die visuelle Erfassungseinrichtung 4 ist als Kamera ausgeführt. Die Datenverarbeitungseinheit 6 umfasst eine Software 8, welche als Bild- und Texterkennungssoftware 8 ausgeführt ist. Außerdem umfasst die Datenverarbeitungseinheit 6 eine Datenbank 10. Damit ist die Datenbank 10 in diesem Beispiel eine lokale Datenbank 10. Weiter sind die visuelle Erfassungseinrichtung 4 und die Datenverarbeitungseinheit 6 durch eine Datenverbindung 11 des Postbeschreibungssystems 2 miteinander verbunden. Die Datenverbindung 11 kann ein über ein Kabel oder kabellos erfolgen.

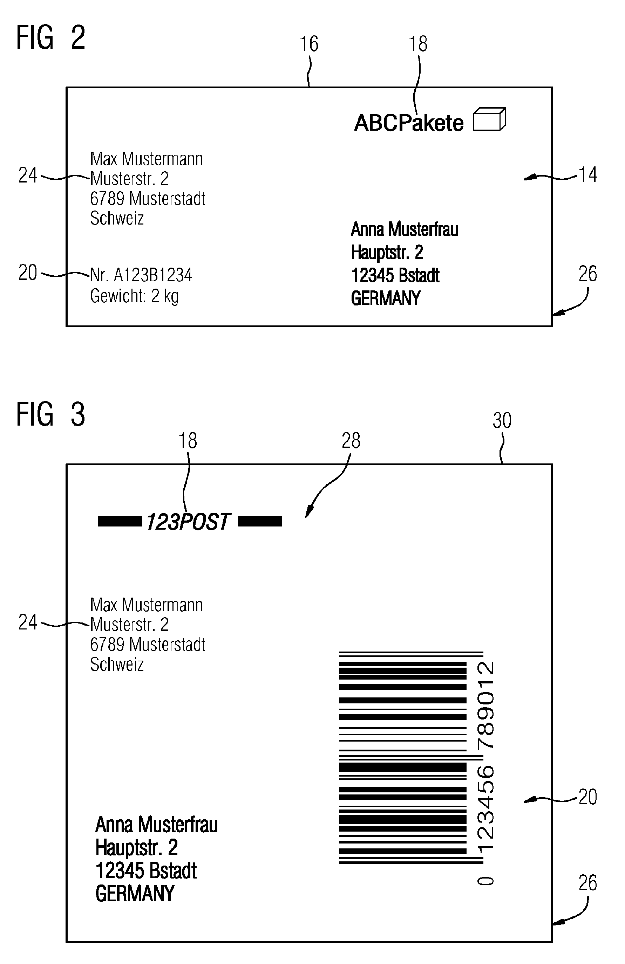

Weiter zeigt FIG 1 eine Postsendung 12 mit einer Versandinformation 14 (vgl. FIG 2). In diesem Beispiel befindet sich die Versandinformation 14 auf einem Etikett 16 der Postsendung 12. Die Versandinformation 14 enthält zumindest eine Information über den Logistikdienstleister sowie Sendungsinformationen.

Die visuelle Erfassungseinrichtung 4 erfasst die Versandinformation 14 der Postsendung 12. Die Erfassung erfolgt vollautomatisch.

Die Versandinformation 14 wird erkannt, insbesondere mittels der Datenverarbeitungseinheit 6. Die Erkennung erfolgt vollautomatisch mittels der Bild- und Texterkennungssoftware 8.

Die Versandinformation 14 sind beispielsweise ein Logo 18, ein Code 20 usw. (vgl. Figuren 2 und 3).

Außerdem wird die Versandinformation 14 unter Verwendung von Vorwissen erkannt. Beispielsweise ist das Vorwissen in der Datenverarbeitungseinheit 6 gespeichert. Als Vorwissen sind z. B. verschiede Logo-Vorlagen gespeichert. Weiter sind den verschiedenen Logo-Vorlagen die jeweiligen Namen des jeweiligen Logistikdienstleisters zugeordnet. Ferner können als Vorwissen weitere Vorlagen mehrerer Logistikdienstleister, z. B. verschiedene Seitenverhältnis-Vorlagen und/oder Platzierungs-Vorlagen des Logos und/oder Platzierungs-Vorlagen des Codes, gespeichert sein.

Außerdem wird die Versandinformation 14 unter Verwendung von trainierbaren Systemen erkannt. Die Datenverarbeitungseinheit 6 umfasst die trainierbaren Systeme. Mittels der trainierbaren Systeme können bestimmte der Versandinformation 14 erlernt werden. Beispielsweise wird ein Logo 18 auch dann einer Logo-Vorlage zugeordnet, wenn das Logo 18 in einem vorgegebenen Maße verändert ist, z. B. wenn das Logo 18 einen Kratzer aufweist, wenn das Logo 18 verschmutzt ist, wenn eine Farbe des Logos 18 innerhalb eines vorgegebenen Bereichs verändert ist und/oder ähnliches.

Weiter wird aus der erkannten Versandinformation der Logistikdienstleister ermittelt. Dazu wird der Postsendung 12 anhand der erkannten Versandinformation 14 der Logistikdienstleister zugeordnet, insbesondere mittels der Datenverarbeitungseinheit 6. Auch die Ermittlung bzw. Zuordnung erfolgt vollautomatisch.

Zur Ermittlung des Logistikdienstleisters wird die Versandinformation 14 zumindest teilweise mit dem Vorwissen verglichen. Beispielsweise wird ein erkanntes Logo 18 mit dem Vorwissen, z. B. mit mehreren Logo-Vorlagen, verglichen. Beispielsweise kann bei dem Vergleich geprüft werden, ob das Logo 18 mit zumindest einer der mehreren Logo-Vorlagen übereinstimmt. Weiter kann bei dem Vergleich geprüft werden, welche der Logo-Vorlagen am besten mit dem erkannten Logo 18 übereinstimmt. Jeder Logo-Vorlage ist ein Logistikdienstleister zugeordnet. Stimmt die Logo-Vorlage mit dem erkannten Logo 18 überein bzw. am besten überein, dann wird der Postsendung 12 der entsprechende Logistikdienstleister zugeordnet.

Auf diese Weise kann durch einen Teil der erkannten Versandinformation 14 (hier das Logo 18) der Logistikdienstleister (hier: ABC-Pakete) ermittelt werden.

Für den ermittelten Logistikdienstleister wird eine Information bestimmt, unter Verwendung derer eine der Sendungsinformationen als die die Postsendung 12 (innerhalb des ermittelten Logistikdienstleisters) identifizierende Sendungsinformation erkannt wird. Die zu bestimmende Information, unter Verwendung derer eine der Sendungsinformationen als die die Postsendung 12 identifizierende Sendungsinformation erkannt wird, wird unter Verwendung von Vorwissen bestimmt.

Hier wird beispielsweise die Platzierung der die Postsendung 12 identifizierende Sendungsinformation und die Form der die Postsendung 12 identifizierende Sendungsinformation bestimmt. Die Platzierung und die Form können beispielsweise mittels der Datenverarbeitungseinheit 6 bestimmt werden. Beispielsweise ist in der Datenverarbeitungseinheit 6 für verschiedene Logistikdienstleister eine Information, hier eine Platzierung und eine Form, gespeichert, unter Verwendung derer die die Postsendung 12 identifizierende Sendungsinformation erkannt wird.

Die Form gibt hier beispielweise an, dass die die Postsendung 12 identifizierende Sendungsinformation ein Code 20 ist, insbesondere ein alphanummerischer Code. Die Platzierung gibt hier beispielsweise an, dass die die Postsendung 12 identifizierende Sendungsinformation unten links, vorletzte Zeile platziert ist. Die Platzierung kann insbesondere in einer Positions-Vorlage gespeichert/hinterlegt sein.

Das Vorwissen, insbesondere das Vorwissen zur Ermittlung des Logistikdienstleisters und/oder das Vorwissen zur Bestimmung/Erkennung der die Postsendung 12 identifizierenden Sendungsinformation, kann beispielsweise in Form zumindest einer Datengruppierung vorliegen. Die Datenverarbeitungseinheit 6 umfasst die Datengruppierung(en).

Die Datengruppierungen können beispielsweise folgende Form haben:
[Name des Logistikdienstleisters; Logo; die die Postsendung identifizierende Sendungsinformation; Form der die Postsendung identifizierenden Sendungsinformation; Platzierung der die Postsendung identifizierenden Sendungsinformation]

Beispielweise kann eine Datengruppierung wie folgt lauten:
[ABCPakete; Text "ABCPakete", Textfarbe schwarz, Bild "Quader", Bildfarbe weiß/schwarz, Bild rechts vom Text; Code; alphanummerischer Code; unten links, vorletzte Zeile] Weiter kann eine zweite Datengruppierung wie folgt lauten: [123POST; Text "123POST", Textfarbe schwarz, Bild "Linie", Liniendicke 4 mm, Linienlänge 15 mm, Bildfarbe schwarz, Bild rechts und links vom Text; Code; Barcode mit Klartextdarstellung; unten rechts, vertikale Ausrichtung]

Der Code 20 (vgl. FIG 2) wird nach der Erfassung unter Verwendung des Vorwissens als die die Postsendung 12 identifizierende Sendungsinformation bestimmt/erkannt.

Anhand eines Teils der Versandinformation 14 (hier: anhand des Logos 18) wird also der Logistikdienstleister ermittelt und anhand des ermittelten Logistikdienstleisters wird eine der Sendungsinformationen (hier: der Code 20) als die die Postsendung 12 (innerhalb des ermittelten Logistikdienstleisters) identifizierende Sendungsinformation erkannt.

Weiter wird anhand der die Postsendung 12 (innerhalb des Logistikdienstleisters) identifizierenden Sendungsinformation die Postsendung 12 identifiziert. Dabei wird der ermittelte Logistikdienstleister mit einbezogen.

Die Ermittlung des Logistikdienstleisters, die Erkennung der die Postsendung 12 identifizierenden Sendungsinformation und die Identifizierung der Postsendung 12 erfolgen vollautomatisch unter Verwendung der Datenverarbeitungeinheit 6.

Zur Identifizierung wird der Postsendung 12 unter Verwendung der Datenbank 10 eindeutig ein Datensatz bzw. eine Empfängerinformation zugeordnet. Die zugeordnete Empfängerinformation ist ein Empfängername und/oder eine Empfängeradresse. Die Empfängerinformation ist in dem Datensatz gespeichert.

Zur Identifizierung werden beispielsweise der Logistikdienstleierst sowie die die Postsendung 12 identifizierende Sendungsinformation mit der Datenbank 10 abgeglichen und die dazugehörige Empfängerinformation kann zugeordnet werden.

Beispielsweise kann die Form des Datensatzes wie folgt sein:
[Name des Logistikdienstleisters; die die Postsendung identifizierende Sendungsinformation; Form der die Postsendung identifizierenden Sendungsinformation; Platzierung der die Postsendung identifizierenden Sendungsinformation; Empfängername; Empfängeradresse]

Insbesondere kann der Datensatz, welcher zur Identifizierung herangezogen wird, wie folgt lauten:
[ABCPakete; A123B1234; alphanummerischer Code; unten links, vorletzte Zeile; Anna Musterfrau; Hauptstr. 2, 12345 Bstadt, GERMANY]

Insbesondere wird das beschriebene Verfahren eingesetzt bei einer Übernahme eines Transports der Postsendung 12 durch einen Fremdlogistikdienstleister. Der Fremdlogistikdienstleister unterscheidet sich von dem Logistikdienstleister, welcher die Versandinformation 14 für die Postsendung 12 erstellt hat bzw. in seinem Namen erstellen lassen hat. Beispielsweise hat das Logistikdienstleister einen ersten Transport(abschnitt) übernommen. Das Fremdlogistikdienstleister übernimmt den Transport unmittelbar oder mittelbar von dem Logistikdienstleister. Auf diese Weise übernimmt der Fremdlogistikdienstleister einen zweiten Transport(abschnitt).

Der Datensatz ist in der Datenbank 10 gespeichert. Außerdem sind in der Datenbank 10 weitere Datensätze gespeichert. Die Datenbank 10 ist in diesem Beispiel eine Datenbank 10 des Fremdlogistikdienstleisters. Der Fremdlogistikdienstleister bekommt Datensätze von dem oben genannten Logistikdienstleister sowie von weiteren Logistikdienstleistern übermittelt. Alternativ oder zusätzlich wäre es auch möglich, dass der Fremdlogistikdienstleister auf eine Datenbank 10 des oben genannten Logistikdienstleisters und/oder auf weitere Datenbanken weiterer Logistikdienstleister zugreifen kann. Weiter wäre es prinzipiell auch möglich, dass der Fremdlogistikdienstleister den Datensatz selbst generiert, beispielsweise mittels eines geeigneten Trainingssystems, welches ein Layout der Versandinformation bzw. des Etiketts erlernen kann.

FIG 2 zeigt die Versandinformation 14 aus FIG 1. Die Versandinformation 14 umfasst eine Information über den Logistikdienstleister, nämlich in diesem Beispiel ein Logo 18. Weiter umfasst die Versandinformation 14 Sendungsinformationen wie einen Code 20, einen Klartext 24, ein Seitenverhältnis 26 des

Etiketts 16 und eine Farbgestaltung des Etiketts 16 und/oder des Logos 18. Weiter umfasst das Etikett 16 als Sendungsinformationen eine Platzierung des Logos 18, eine Platzierung des Klartexts 24 und eine Platzierung des Codes 20. Der Code 20 ist in diesem Beispiel die die Postsendung 12 innerhalb des ermittelten Logistikdienstleisters identifizierende Sendungsinformation.

Die in FIG 2 dargestellten Versandinformationen lauten wie folgt:
Seitenverhältnis 26 des Etiketts 16 (Höhe:Breite): 1:2
Logo 18: Text "ABCPakete", Textfarbe schwarz, Bild "Quader", Bildfarbe weiß/schwarz, Bild rechts vom Text
Platzierung des Logos 18: oben rechts
Klartext 24: Absender "Max Mustermann, Musterstr. 2, 6789 Musterstadt, Schweiz", Empfänger "Anna Musterfrau, Hauptstr. 2, 12345 Bstadt, GERMANY"
Platzierung des Klartexts 24: Absender oben links, Empfänger unten rechts
Code 20: alphanummerischer Code, "A123B1234"
Platzierung des Codes 20: unten links, vorletzte Zeile

Der Code 20 ist ein alphanummerischer Code, welcher Zahlen und Buchstaben enthält und sowohl maschinen- als auch menschenlesbar ist. Der Code 20 des Etiketts ist eine die Postsendung identifizierende Sendungsinformation, welche zur Identifizierung der Postsendung 12 genutzt werden kann. Das heißt, unter Verwendung der die Postsendung 12 identifizierende Sendungsinformation kann der Postsendung 12 beispielsweise ein Datensatz und/oder eine Empfängerinformation zugeordnet werden.

FIG 3 zeigt eine andere Versandinformation 28, welche sich auf einem anderen Etikett 30 befindet. Die andere Versandinformation 28 und das andere Etikett 30 stellen eine alternative Ausgestaltung zu der Versandinformation 14 und dem Etikett 16 aus dem ersten Ausführungsbeispiel (in den Figuren 1 und 2) dar. Die nachfolgende Beschreibung beschränkt sich im Wesentlichen auf die Unterschiede zum Ausführungsbeispiel aus den Figuren 1 und 2, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In diesem Beispiel sind die Versandinformationen 14 wie folgt:
Seitenverhältnis 26 des Etiketts 16 (Höhe:Breite): 1:1
Logo 18: Text "123POST", Textfarbe schwarz, Bild "Linie", Liniendicke 4 mm, Linienlänge 15 mm, Bildfarbe schwarz, Bild rechts und links vom Text
Platzierung des Logos 18: oben links
Klartext 24: Absender "Max Mustermann, Musterstr. 2, 6789 Musterstadt, Schweiz", Empfänger "Anna Musterfrau, Hauptstr. 2, 12345 Bstadt, GERMANY"
Platzierung des Klartexts 24: Absender oben links unter dem Logo, Empfänger unten links
Code 20: Barcode mit Klartextdarstellung, "0123456789012" Platzierung des Codes 20: unten rechts, vertikale Ausrichtung

Die jeweilige Platzierung kann zusätzlich oder alternativ auch in Koordinatenform erfasst werden und/oder vorliegen. Beispielsweise kann die Platzierung des Logos 18 auch lauten: [1; 1,5]. Die Platzierung des Klartextes 24 könnte entsprechend lauten: Absender [0,8; 3,7], Empfänger [1; 9,5].

Der Logistikdienstleister (hier: 123POST) wird anhand des Logos 18 ermittelt bzw. erkannt. Die die Postsendung 12 identifizierende Sendungsinformation wird unter Verwendung von Vorwissen, welches in der Datenverarbeitungseinheit 6 gespeichert ist, bestimmt.

Der Code 20 ist die die Postsendung 12 innerhalb des ermittelten Logistikdienstleisters identifizierende Sendungsinformation. Der Code 20 ist ein Barcode, welcher maschinenlesbar ist. Weiter ist der Code 20 als Klartextdarstellung des Barcodes dargestellt. Die Klartextdarstellung des Barcodes ist ein (alpha-)nummerischer Code aus Zahlen, welcher menschenlesbar (und ggf. maschinenlesbar) ist.

Zur Identifizierung wird der Postsendung 12 unter Verwendung der Datenbank 10 eindeutig ein Datensatz bzw. eine Empfängerinformation zugeordnet. Insbesondere kann der Datensatz, welcher in der Datenbank 10 gespeichert ist und der Postsendung 12 zugeordnet wird, wie folgt lauten:
[123POST; 0123456789012; Barcode mit Klartextdarstellung; unten rechts, vertikale Ausrichtung; Anna Musterfrau; Hauptstr. 2, 12345 Bstadt, GERMANY]

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: Postbeschreibungssystem
- 4: Erfassungseinrichtung
- 6: Datenverarbeitungseinheit
- 8: Bild- und Texterkennungssoftware
- 10: Datenbank
- 11: Datenverbindung
- 12: Postsendung
- 14: Versandinformation
- 16: Etikett
- 18: Logo
- 20: Code
- 24: Klartext
- 26: Seitenverhältnis
- 28: Versandinformation
- 30: Etikett

## Patentansprüche

1. Verfahren zur Bearbeitung einer Postsendung (12) mit einer Versandinformation (14) eines Logistikdienstleisters, wobei die Versandinformation (14) zumindest eine Information über den Logistikdienstleister sowie Sendungsinformationen enthält,
bei dem
aus der Versandinformation (14) der Logistikdienstleister ermittelt wird und
eine der Sendungsinformationen als die die Postsendung (12) innerhalb des ermittelten Logistikdienstleisters identifizierende Sendungsinformation erkannt wird.

2. Verfahren nach Anspruch 1,
**dadurch gekennzeichnet, dass**
für den ermittelten Logistikdienstleister eine Information bestimmt wird, unter Verwendung derer eine der Sendungsinformationen als die die Postsendung (12) identifizierende Sendungsinformation erkannt wird.

3. Verfahren nach Anspruch 2,
**dadurch gekennzeichnet, dass** die für den ermittelten Logistikdienstleister bestimmte Information eine Platzierung der die Postsendung (12) identifizierenden Sendungsinformation und/oder eine Form der die Postsendung (12) identifizierenden Sendungsinformation ist.

4. Verfahren nach einem der vorhergehenden Ansprüche,
**dadurch gekennzeichnet, dass** unter Verwendung der die Postsendung (12) identifizierenden Sendungsinformation die Postsendung (12) identifiziert wird.

5. Verfahren nach Anspruch 4,
**dadurch gekennzeichnet, dass** bei der Identifizierung der Postsendung (12) zumindest eindeutig eine Empfängerinformation zugeordnet wird, insbesondere unter Verwendung einer Datenbank 10.

6. Verfahren nach einem der vorhergehenden Ansprüche,
**dadurch gekennzeichnet, dass** die Versandinformation (14) ein Abmaß, ein Seitenverhältnis (26), eine Farbgestaltung, ein Logo (18), einen Klartext (24), einen Code (20), eine Platzierung des Logos (18), eine Platzierung des Klartexts (24) und/oder eine Platzierung des Codes (20) umfasst.

7. Verfahren nach einem der vorhergehenden Ansprüche,
**dadurch gekennzeichnet, dass** zur Ermittlung des Logistikdienstleisters die Versandinformation (14) erfasst wird.

8. Verfahren nach einem der vorhergehenden Ansprüche,
**dadurch gekennzeichnet, dass** zur Ermittlung des Logistikdienstleisters die Versandinformation (14) mittels einer Bilderkennungssoftware (8) und/oder mittels einer Texterkennungssoftware (8) erkannt wird.

9. Verfahren nach einem der vorhergehenden Ansprüche,
**dadurch gekennzeichnet, dass** zur Ermittlung des Logistikdienstleisters die Versandinformation (14) unter Verwendung von Vorwissen und/oder unter Verwendung von trainierbaren Systemen erkannt wird.

10. Verfahren nach Anspruch 9,
**dadurch gekennzeichnet, dass** zur Ermittlung des Logistikdienstleisters die Versandinformation (14) zumindest teilweise mit dem Vorwissen verglichen wird.

11. Verfahren nach einem der vorhergehenden Ansprüche,
**dadurch gekennzeichnet, dass** die die Postsendung (12) identifizierende Sendungsinformation unter Verwendung von Vorwissen und/oder unter Verwendung von trainierbaren Systemen bestimmt und/oder erkannt wird.

12. Verfahren nach einem der vorhergehenden Ansprüche,
**dadurch gekennzeichnet, dass** die Ermittlung des Logistikdienstleisters und die Erkennung der die Postsendung (12) identifizierenden Sendungsinformation zumindest teilautomatisch erfolgt.

13. Verfahren nach einem der vorhergehenden Ansprüche, eingesetzt bei einer Übernahme eines Transports der Postsendung 12 durch einen Fremdlogistikdienstleister.

14. Postbeschreibungssystem (2) mit einer visuellen Erfassungseinrichtung (4) und einer Datenverarbeitungseinheit (6) eingerichtet zur Durchführung eines Verfahrens nach einem der vorhergehenden Ansprüche.

15. Postbeschreibungssystem (2) nach Anspruch 13,
**dadurch gekennzeichnet, dass** die visuelle Erfassungseinrichtung (4) eine Kamera aufweist.
